# EUROPEAN PATENT SPECIFICATION

(11) **EP 2 583 560 B1**
(45) Date of publication and mention of the grant of the patent: **01.05.2019**
(21) Application number: 11798085.4
(22) Date of filing: 20.06.2011
(51) Int. Cl.: A23F 3/16, A23F 3/18, A23F 3/42

(54) **GREEN TEA EXTRACT**
GRÜNTEE-EXTRAKT
EXTRAIT DE THÉ VERT

(30) Priority: 21.06.2010 JP 2010140827
(43) Date of publication of application: 24.04.2013
(73) Proprietor: Suntory Holdings Limited, Osaka 530-8203 (JP)
(72) Inventor: KOBAYASHI, Shinichi, Kawasaki-shi Kanagawa 211-0067 (JP); TERAZAWA, Noriko, Kawasaki-shi Kanagawa 211-0067 (JP); MAKI, Hideki, Kawasaki-shi Kanagawa 211-0067 (JP); NAGAO, Koji, Kawasaki-shi Kanagawa 211-0067 (JP); HAYAKAWA, Satoshi, Kawasaki-shi Kanagawa 211-0067 (JP); MAEKAWA, Koichiro, Urayasu-shi Chiba 279-0032 (JP); SATO, Tsuyoshi, Urayasu-shi Chiba 279-0032 (JP); OSADA, Akinori, Urayasu-shi Chiba 279-0032 (JP)
(74) Representative: Jacobi, Markus Alexander
(86) International application number: PCT/JP2011/064042
(87) International publication number: WO 2011/162201

(56) References cited:
- JP-A- 2007 295 921
- JP-A- 2007 295 921
- JP-A- 2008 092 817
- JP-A- 2008 092 817
- JP-A- 2010 013 510
- JP-A- 2010 013 510
- JP-A- 2010 207 116
- JP-A- 2011 000 515

## Description

### Technical Field

The present invention relates to a green tea extract that imparts excellent flavor to beverages such as packed green tea drinks, and to a method for producing it.

### Background Art

Tea drinks, such as green tea, provide pleasure during daily life and have become an indispensable part of Japanese life. Much attention has been focused in recent years on the antioxidant properties of tea, and green tea drinks have become a major type of sugar-free drinks consumed as non-calorie healthy beverages. A large variety of tea drinks have been marketed in recent years with an increasing range of palatability.

Marketed green tea drinks are generally prepared by first obtaining green tea extract by extraction of green tea leaves with an aqueous solvent such as water, adjusting the concentration of the green tea extract to a drinkable concentration, and then packaging it in a sealed container such as a can or PET bottle. However, extraction with aqueous solvents does not allow sufficient recovery of the flavor components in the tea leaves, while quality flavor is notably impaired by the heat sterilization carried out during production of packed green tea drinks. Because flavor, and notably aroma, is a highly weighted aspect for the quality of green tea drinks, various different methods have been proposed for improving the flavor of packed green tea drinks. Examples of tea extracts with good flavor exhibited by collecting the flavor components of tea leaves include a tea extract with excellent aroma and flavor even after a sterilizing step, which is obtained by a method comprising step 1: dipping or wetting the tea leaves with hot water, step 2: performing water vapor extraction of the tea leaves obtained from step 1 and recovering the distilled liquid, step 3: extracting the distilled residue from step 2 with water and recovering the extract, and step 4: mixing the distilled liquid from step 2 with the extract from step 3 (Patent document 1), and a tea extract that imparts the rounded sweetness of powdered tea, obtained by a method comprising a first step of preparing a slurry of powdered tea with hot water, treating the slurry with a counter-current contact column (SCC) and recovering the flavor, a second step of hot water extraction of different tea leaves, removal of the solid components followed by activated carbon treatment, and then removal of the active carbon by filtration to obtain a tea extract, and a third step of mixing the flavor obtained by the first step with the tea extract obtained by the second step (Patent document 2) .

A novel flavor that can impart a well-balanced flavor to flavorful drinks such as green tea, oolong tea and black tea is known, which contains a flavor (A) obtained by steam distillation of a flavorful drink starting material and a flavor (B) obtained by passing a flavorful drink starting material through a counter-current contact column (SCC), the range of flavor (B) being in the range of 0.01 to 100 parts by weight to 1 part by weight of the flavor (A) (Patent document 3). Also known, as flavor-improving tea drink additives, are a tea drink additive that imparts a satisfying feel, comprising 2,3-diethyl-5-methylpyrazine, 2-methylpyrazine or 3-ethyl-2,5-dimethylpyrazine (Patent document 4), a tea drink additive that imparts the rounded sweetness of high-grade tea leaves, comprising 2,5-dimethyl-4-hydroxy-3(2H)-furanone (Patent document 5), and a tea drink additive that imparts the rounded sweetness of high-grade tea leaves, comprising an activated carbon-treated tea extract (Patent document 6).

### Citation List

### Patent literature

[Patent document 1] Japanese Patent Publication No. 4104018
[Patent document 2] Japanese Unexamined Patent Application Publication No. 2007-167005
[Patent document 3] Japanese Unexamined Patent Application Publication No. 2003-33137
[Patent document 4] Japanese Unexamined Patent Application Publication No. 2008-148604
[Patent document 5] Japanese Unexamined Patent Application Publication No. 2007-167003
[Patent document 6] Japanese Unexamined Patent Application Publication No. 2007-167004
   JP 2010-013510, manufacturing method for a natural aroma concentrate with which the favorable fragrance balance of the natural raw material was maintained.
   JP 2007-295921, manufacturing method for a tea extract.
   JP 2008-092817, manufacturing method for a tea extract which is excellent in taste.s

### Summary of Invention

### Technical Problem

The prior art provides some effect for improving the flavor of packed tea drinks, but does not provide the sweet, delightful green aroma reminiscent of fresh tea, that is experienced when preparing tea from high-grade green tea leaves. Furthermore, while it is possible to use high-grade green tea leaves as a starting material for a packed green tea drink, it is an expensive starting material, and even if further extraction allows recovery of a higher quality flavor, subsequent heat sterilization can lower or alter the flavor. Thus, it has been difficult to provide high-quality and abundant flavor with packed green tea drinks such as canned green tea drinks and PET bottled green tea drinks.

It is an object of the present invention to provide a material for a packed green tea drink that has the sweet, excellent green aroma and delightful floral aroma of high-grade green tea leaves, even when using inexpensive low-grade green tea as the starting material, and that can be used to produce a packed green tea drink that undergoes minimal reduction or loss of flavor during heat sterilization.

### Solution to Problem

The present inventors have examined methods of producing green tea extract, with the aim of providing a material that can improve the flavor of packed green tea drinks.

Low-grade green tea leaves contain the same quality flavor components as high-grade green tea leaves, but in lower amounts than high-grade green tea leaves. Low-grade green tea leaves also contain undesirable flavor components not found in high-grade green tea leaves, and they are sources of inferior flavor compared to high-grade tea leaves. In the case of green tea, unlike "ichibancha" which is picked first, the "nibancha", "sanbancha" and "yonbancha" that are picked later have a characteristic flavor known as "bancha odor" (coarse green tea odor), and they tend to lack a fresh, delightful flavor such as exhibited by "ichibancha". As a result of much research on methods of producing green tea extract, the present inventors have found that the undesirable flavor components in low-grade green tea leaves such as nibancha, sanbancha and yonbancha are removed by vacuum steam distillation of the green tea leaves, and that if the green tea leaves from which the undesirable flavor components have been removed are subjected to atmospheric-pressure steam distillation, a liquid distillate is obtained whose sweet, quality green aroma and delightful floral aroma is comparable to that of high-grade green tea leaves. In addition, it was found that if this liquid distillate is mixed with a green tea extract obtained by water extraction from a green tea leaf residue from steam distillation, and thermally treated at low temperature, the sweet, quality green aroma and delightful floral aroma are augmented. Based on this knowledge, it was found that by removing the flavor components recovered by vacuum steam distillation from low-grade green tea leaves, and then conducting atmospheric-pressure steam distillation, recovering the liquid distillate, mixing the liquid distillate with a green tea extract obtained by water extraction of green tea leaves after steam distillation, and performing heat sterilization of the resulting extract at a lower temperature than normal, it is possible to obtain a green tea extract having sweet, quality green aroma and a delightful floral aroma comparable to using high-grade green tea leaves as a starting material, as well as low degradation of flavor by heat sterilization, and the invention was thereupon completed.

Specifically, the present invention provides the following.
[1] A process for producting green tea extract comprising step 1 in which a liquid distillate obtained by fractionation from green tea leaves by vacuum steam distillation, wherein the conditions for the vacuum steam distillation are pressure reduction at a gauge pressure of -90 to -30 kN/m² [kPaG], steam distillation at a space velocity (SV) of 50 to 450 h⁻¹, and a distillate volume of 5 to 100% (weight ratio) with respect to the tea leaf starting material, is removed, step 2 in which the green tea leaves from which the liquid distillate has been removed in step 1 are fractionated by atmospheric-pressure steam distillation to obtain a liquid distillate, step 3 in which the green tea leaf residue after steam distillation in step 2 is subjected to water extraction to obtain a liquid extract, step 4 in which the liquid distillate of step 2 and the liquid extract of step 3 are mixed to prepare a green tea extract, and step 5 in which the green tea extract of step 4 is subjected to thermal treatment at a temperature of no higher than 100°C.
[2] The process for producing a green tea extract according to [1], which comprises, before step 4, a step in which the liquid extract of step 3 is treated with one or more enzymes selected from among tannase, pectinase and cellulase.
[3] The process for producing a drink comprising a step of adding the green tea extract produced by the process according to any one of [1] or [2].
[4] The process for producing a drink according to [3], wherein the drink to which the green tea extract is to be added comprises a tea extract obtained by extraction with water from green tea leaves.
[5] The process according to [3] or [4], wherein the drink is a packed green tea drink.

### Advantageous Effects of Invention

The green tea extract of the invention, when diluted to drinkable concentration as a packed green tea drink, exhibits the excellent flavor experienced when high-grade tea leaves are prepared with a teapot (the sweet, delightful green aroma reminiscent of fresh tea), and therefore allows production of a packed green tea drink with high-quality richness not found in the prior art. Due to the full flavor, it is also possible to avoid addition of other aromatic additives (flavors).

### Description of Embodiments

The invention will now be explained in detail by way of embodiments thereof.

### (1) Green tea leaf starting material

The green tea leaves used as starting material for the green tea extract of the invention are a source for unfermented tea obtained by inactivation of the oxidizing enzymes in the tea leaves by thermal treatment after harvesting of the buds, leaves or stems of *Camellia sinensis,* an evergreen tree of the Theaceae family, and they may include sencha, gyokuro, kabusecha, bancha, tamaryokucha, powdered tea, hojicha, kamairicha, tencha, or the like. There are no particular restrictions on the type, grade, locality and production method for the green tea leaves, and any tea leaves may be used. Alternatively, green tea leaves of two or more different types may be used in admixture.

### (2) Green tea extract

The term "green tea extract" as used herein refers to tea extract obtained by extraction from tea leaves with an aqueous solvent such as water, as a material for tea drinks to be diluted and used for production of a tea drink, and in particular the green tea extract of the invention is a mixture of such a tea extract with a liquid distillate obtained by fractionation from green tea leaves by steam distillation.

The green tea extract of the invention is preferably prepared to a Brix (soluble solid weight [g] per 100 g of solution) of no greater than 10, and especially a Brix of 1-10. A Brix of greater than 10 will tend to interfere with stable storage of excellent flavor. In addition, concentration to a Brix of greater than 10 is also problematic from the viewpoint of flavor, as the natural rounded sweetness may be lost by heating during concentration. On the other hand, a Brix of less than 1 will tend to result in loss of natural rounded sweetness, and is also unsuitable from an economical standpoint.

### (3) Step 1

In production of the green tea extract of the invention, first the green tea leaf starting material of (1) above is subjected to steam distillation under reduced pressure and the distillate flavor components are separated. The undesirable flavor components in low-grade green tea leaves can be effectively removed by this procedure. The degree of pressure reduction for the vacuum steam distillation is in the range of -90 to -30 kN/m² [kPaG] and more preferably in the range of -71 to -31 kN/m² [kPaG], as gauge pressure. If the degree of pressure reduction exceeds -90 kN/m² [kPaG] as gauge pressure, the potency of the flavor components may be weakened, and if the pressure reduction is less than -30 kN/m² [kPaG] as gauge pressure, a musty aroma may be produced. The term "gauge pressure" as used herein means "based on atmospheric pressure".

The space velocity (SV) of the vacuum steam distillation is in the range of 50 to 450 h⁻¹, but it is more preferably in the range of 100 to 350 h⁻¹, and preferably the distilling apparatus used has a construction that allows measurement of the distillate volume and fractionation. A space velocity of less than 50 h⁻¹ is unsuitable because excessive time will be required for commercial extraction, and the excessive time may undesirably increase the musty aroma, while a space velocity of greater than 450 h⁻¹ may weaken the character of the obtained flavor components, potentially resulting in insufficient potency.

The distillate volume will usually be 5-100%, and is more preferably 5-15%, as the weight ratio with respect to the green tea leaf starting material. If the distillate volume is less than 5% of the green tea leaf starting material, the undesirable flavor components will be insufficiently removed, and if it is greater than 100% the desirable flavor components will also be distilled out, potentially impairing the flavor of the final obtained green tea extract.

### (4) Step 2

The green tea leaf starting material from which the undesirable flavor components have been removed by vacuum steam distillation is subjected to atmospheric-pressure steam distillation to recover the liquid distillate. The distillation conditions are preferably a space velocity (SV) of 60 to 100 h^{- 1}, and preferably the distilling apparatus used allows measurement of the distillate volume and fractionation. The distillate volume is generally preferred to be 50-150% as the weight ratio with respect to the green tea leaf starting material. The green tea leaves from which the undesirable flavor components have been removed in step 1 do not have a very powerful flavor, but subjecting it to atmospheric-pressure steam distillation yields a liquid distillate with an excellent flavor comparable to high-grade green tea leaves. The reason for the increase in flavor components by atmospheric-pressure steam distillation is not fully understood, but presumably the high-quality flavor components are present as glucosides in the tea leaves, and are hydrolyzed by atmospheric-pressure steam distillation, being distilled out with the water vapor as flavor components.

### (5) Step 3

In step 3, the green tea leaf residue obtained by atmospheric-pressure steam distillation is subjected to water extraction to obtain a liquid extract. There are no particular restrictions on the water extraction, but preferably an apparatus is used that can measure the extraction volume and perform fractionation, and more preferably it is accomplished by a drip system. The extraction temperature is not particularly restricted but is preferably 30°C to 100°C. The extraction volume is also not particularly restricted, but will usually be 100-1000% and more preferably 200-700% as the weight ratio with respect to the green tea leaf starting material before steam distillation.

The obtained extract may be directly mixed with the liquid distillate of step 2 to prepare a green tea extract (step 4), but enzyme treatment can yield a high-clarity green tea extract with superior flavor. The enzyme is not particularly restricted, and may be any enzyme commonly used for production of tea drinks, such as a tannase, pectinase, cellulase, hemicellulase or protease, but it is most preferred to use one or more enzymes selected from among tannases, pectinases and cellulases. The amount of enzyme used will differ according to the potency, but may typically be in the range of 0.01 to 100 unit/g, based on the weight of the green tea leaf starting material.

### (6) Step 4

A green tea extract is obtained by mixing the liquid distillate obtained in step 2 with the extract obtained in step 3. Since the green tea extract has the undesirable flavor components removed by vacuum steam distillation, it has excellent flavor comparable to that obtained when using high-grade tea leaves (the sweet, delightful green aroma reminiscent of fresh tea), even if low-grade green tea leaves have been used as the starting material.

An antioxidant such as ascorbic acid or a pH regulator such as sodium bicarbonate may also be added to the green tea extract of the invention as necessary.

### (7) Step 5

The green tea extract of the invention is obtained by a step of thermal treatment of the green tea extract obtained in step 4 at a temperature of no higher than 100°C. Since conducting thermal treatment increases the flavor potency of the green tea extract, this can be effectively used in the production of packed green tea drinks whose flavor is reduced by heat sterilization.

The conditions for thermal treatment must be no higher than 100°C, and they are preferably 75°C to 100°C. If the thermal treatment temperature exceeds 100°C, the increased flavor potency may disrupt the flavor balance, potentially resulting in loss of subtle flavor of the green tea extract of the invention, while if it is below 75°C, the desired flavor potency may not be achieved. The increased flavor potency by thermal treatment is attributed to the thermal treatment causing hydrolysis of the glucosides of the quality flavor components extracted from the green tea leaves, thus resulting in production of the flavor components.

### (8) Application of green tea extract

Examples of drinks to which the green tea extract of the invention may be added include green tea drinks obtained by extraction of green tea leaves with hot water, warm water or cold water by common methods (referred to as "standard tea drinks" in the following examples), and mixed drinks having green tea flavor, obtained by appropriate formulation of green tea flavor components, as well as various mixed tea drinks prepared by adding different types of health-promoting materials to green tea drinks.

The green tea extract of the invention will usually be used by addition of the green tea extract to the tea drink at 0.0001 to 5 wt% as solid content. Addition at a concentration of below 0.0001 wt% may fail to cause a sweet flavor to be detected, depending on the person, while addition at a concentration of greater than 5 wt% may result in overly thick green aroma. In order to satisfactorily exhibit the effect of the invention, the amount of addition is most preferably 0.0005 to 1 wt% as the solid content of the tea extract. In addition, when the green tea extract of the invention is used, it is desirable to formulate it as a flavoring composition for a drink.

Flavoring compositions are generally formulated with addition at about 0.1 wt% to their target foods, and assuming such formulation, the green tea extract of the invention will usually be present at 0.1-100 wt% and preferably 1-50 wt% in the flavoring composition. The tea drink of the invention that is to be produced by addition of green tea extract has a quality, abundant flavor even after heat sterilization. The heat sterilization conditions for production of the tea drink of the invention are preferably such that an F value of about 5-30 is satisfied.

### Examples

The invention will now be described in greater detail by examples, with the understanding that the invention is not limited to the examples.

### [I] Production and evaluation of liquid distillate from steam distillation

### <Experimental Example 1>

"Shutobancha" (fall-harvested) tencha was charged at 2 kg into a steam distiller and evenly dispersed in 1 kg of water at 35°C, and then allowed to stand for 10 minutes for moistening. Upon completion of the moistening, it was subjected to pressure reduction to -54 kN/m² [kPaG] as gauge pressure, and then steam distillation was carried out at an SV (space velocity) of 325 h⁻¹, distilling out 0.2 kg of liquid distillate as steam fraction 1-1. Next, the container interior was restored to ordinary pressure, steam distillation was carried out under ordinary pressure, 2 kg of liquid distillate was distilled out and the obtained liquid distillate was used as steam fraction 1-2.

### <Experimental Example 2>

"Shutobancha" tencha was charged at 2 kg into a steam distiller and evenly dispersed in 1 kg of water at 35°C, and then allowed to stand for 10 minutes for moistening. Upon completion of the moistening, it was subjected to pressure reduction to -54 kN/m² [kPaG] as gauge pressure, and then steam distillation was carried out at an SV (space velocity) of 585 h⁻¹, distilling out 0.2 kg of liquid distillate which was removed. Next, the container interior was restored to ordinary pressure, steam distillation was carried out under ordinary pressure, 2 kg of liquid distillate was distilled out and the obtained liquid distillate was used as steam fraction 2.

### <Experimental Example 3>

"Shutobancha" tencha was charged at 2 kg into a steam distiller and evenly dispersed in 1 kg of water at 35°C, and then allowed to stand for 10 minutes for moistening. Upon completion of the moistening, it was subjected to pressure reduction to -54 kN/m² [kPaG] as gauge pressure, and then steam distillation was carried out at an SV (space velocity) of 325 h⁻¹, distilling out 0.08 kg of liquid distillate which was removed. Next, the container interior was restored to ordinary pressure, steam distillation was carried out under ordinary pressure, 2 kg of liquid distillate was distilled out and the obtained liquid distillate was used as steam fraction 3.

### <Experimental Example 4>

"Shutobancha" tencha was charged at 2 kg into a steam distiller and evenly dispersed in 1 kg of water at 35°C, and then allowed to stand for 10 minutes for moistening. Upon completion of the moistening, it was subjected to pressure reduction to -54 kN/m² [kPaG] as gauge pressure, and then steam distillation was carried out at an SV (space velocity) of 325 h⁻¹, distilling out 2.4 kg of liquid distillate which was removed. Next, the container interior was restored to ordinary pressure, steam distillation was carried out under ordinary pressure, 2 kg of liquid distillate was distilled out and the obtained liquid distillate was used as steam fraction 4.

### <Experimental Example 5>

"Shutobancha" tencha was charged at 2 kg into a steam distiller and evenly dispersed in 1 kg of water at 35°C, and then allowed to stand for 10 minutes for moistening. Upon completion of the moistening, it was subjected to pressure reduction to -54 kN/m² [kPaG] as gauge pressure, and then steam distillation was carried out at an SV (space velocity) of 325 h⁻¹, distilling out 2 kg of liquid distillate, and the obtained liquid distillate was used as steam fraction 5.

### <Experimental Example 6>

"Shutobancha" tencha was charged at 2 kg into a steam distiller and evenly dispersed in 1 kg of water at 35°C, and then allowed to stand for 10 minutes for moistening. Upon completion of the moistening, steam distillation was carried out under ordinary pressure, 2 kg of liquid distillate was distilled out and the obtained liquid distillate was used as steam fraction 6.

### <Test Example 1>

The steam fractions obtained in Experimental Examples 1 to 6 were evaluated. Evaluation samples were prepared by addition of the steam fractions to distilled water. The amount of steam fraction added was 1 wt%. The evaluation was conducted by an evaluation panel of 4 skilled members, judging the strength of overall flavor, sweet green aroma, delightful floral aroma and bancha odor on a 7-level scale from 1 (very weak) to 7 (very strong). The averages for the evaluation points are shown in Table 1, and comments are shown in Table 2.

**[Table 1: Evaluation scores]**

| | Evaluation sample | Strength of overall flavor | Sweet green aroma | Delightful floral aroma | Bancha odor |
|---|---|---|---|---|---|
| Experimental Example 1 | Steam fraction 1-2 | 6.5 | 6.3 | 6.3 | 1.8 |
| Experimental Example 2 | Steam fraction 2 | 3.8 | 3.5 | 2.8 | 3.8 |
| Experimental Example 3 | Steam fraction 3 | 5.0 | 4.3 | 4.5 | 5.0 |
| Experimental Example 4 | Steam fraction 4 | 1.8 | 2.3 | 2.0 | 2.8 |
| Experimental Example 5 | Steam fraction 5 | 4.0 | 3.5 | 3.8 | 6.0 |
| Experimental Example 6 | Steam fraction 6 | 4.3 | 3.8 | 3.0 | 6.5 |

**[Table 2: Comments]**

| | Evaluation sample | Evaluation comment |
|---|---|---|
| Experimental Example 1 | Steam fraction 1-2 | Virtually no bancha odor, very strong sweet green aroma and delightful floral aroma |
| Experimental Example 2 | Steam fraction 2 | Weak overall potency, weak green aroma and floral aroma |
| Experimental Example 3 | Steam fraction 3 | Moderate potency, strong bancha odor |
| Experimental Example 4 | Steam fraction 4 | Weak potency of aroma and flavor, weak bancha odor, some heating odor noted |
| Experimental Example 5 | Steam fraction 5 | Strong bancha odor, some burnt odor noted |
| Experimental Example 6 | Steam fraction 6 | Very strong bancha odor, unpleasant |

As shown in Tables 1 and 2, conducting vacuum steam distillation or atmospheric-pressure steam distillation alone (steam fractions 5 and 6) could not remove bancha odor, but conducting atmospheric-pressure steam distillation after removing the liquid distillate by vacuum steam distillation (steam fractions 1-2 and 2-4) successfully reduced bancha odor.

Since steam fraction 1-2 had the highest evaluation, a green tea extract was prepared in the following examples using the conditions of Experimental Example 1.

### [II] Production of green tea extract and evaluation

### <Example 1>

"Shutobancha" tencha was charged at 2 kg into a steam distiller and evenly dispersed in 1 kg of water at 35°C, and then allowed to stand for 10 minutes for moistening. Upon completion of the moistening, it was subjected to pressure reduction to -54 kN/m² [kPaG] as gauge pressure, and then steam distillation was carried out at an SV (space velocity) of 325 h⁻¹, distilling out 0.2 kg of liquid distillate from the tea leaf starting material, which was removed. Next, the container interior was restored to ordinary pressure, steam distillation was carried out under ordinary pressure, and 2 kg of liquid distillate was distilled out from the tea leaf starting material. Immediately after the steam distillation, the tea leaves were extracted with water at 80°C to obtain 10 kg (Brix: 4.6) of extract from the tea leaf starting material. The extract was subject to enzyme treatment with tannase and pectinase and clarified by filtration, and concentrated under reduced pressure to obtain 0.47 kg of concentrate (Brix: 43). After mixing and dissolving 5 g of ascorbic acid in the concentrate, 2 kg of liquid distillate was mixed therewith and the mixture was stirred to uniformity. The formulated extract was subjected to heat sterilization at 80°C × 30 sec to obtain a green tea extract (Brix: 8.4).

### <Example 2>

"Shutobancha" tencha was charged at 2 kg into a steam distiller and evenly dispersed in 1 kg of water at 35°C, and then allowed to stand for 10 minutes for moistening. Upon completion of the moistening, it was subjected to pressure reduction to -54 kN/m² [kPaG] as gauge pressure, and then steam distillation was carried out at an SV (space velocity) of 325 h⁻¹, distilling out 0.2 kg of liquid distillate from the tea leaf starting material, which was removed. Next, the container interior was restored to ordinary pressure, steam distillation was carried out under ordinary pressure, and 2 kg of liquid distillate was distilled out from the tea leaf starting material. Immediately after the steam distillation, the tea leaves were extracted with water at 80°C to obtain 10 kg (Brix: 4.6) of extract from the tea leaf starting material. The extract was clarified by filtration, and concentrated under reduced pressure to obtain 0.47 kg of concentrate (Brix: 43). After mixing and dissolving 5 g of ascorbic acid in the concentrate, 2 kg of liquid distillate was mixed therewith and the mixture was stirred to uniformity. The formulated extract was subjected to heat sterilization at 80°C × 30 sec to obtain a green tea extract (Brix: 8.4).

### <Comparative Example 1>

After adding 0.1 kg of "Shutobancha" tencha to 3 kg of water warmed to 60°C, the mixture was stirred for 5 minutes and extracted by immersion. Following extraction, the tea leaves were separated with a 100 mesh and cooled, and then filtered for clarification to obtain 2.5 kg of extract. Next, 5 g of ascorbic acid was added and dissolved therein, and the solution was subjected to heat sterilization at 80°C × 30 sec to obtain a green tea liquid extract (Brix: 0.58).

### <Comparative Example 2>

"Shutobancha" tencha was charged at 2 kg into a steam distiller and evenly dispersed in 1 kg of water at 35°C, and then allowed to stand for 10 minutes for moistening. After moistening was complete, steam distillation was carried out under ordinary pressure, and 2 kg of liquid distillate was distilled out from the tea leaf starting material. Immediately after the steam distillation, the tea leaves were extracted with water at 80°C to obtain 10 kg (Brix: 4.6) of extract from the tea leaf starting material. The extract was subject to enzyme treatment with tannase and pectinase and clarified by filtration, and concentrated under reduced pressure to obtain 0.47 kg of concentrate (Brix: 43). In the concentrate there was mixed and dissolved 5 g of ascorbic acid, after which 2 kg of liquid distillate was mixed therewith and stirred to uniformity, and the mixture was subjected to heat sterilization at 80°C × 30 sec to obtain a green tea extract (Brix: 8.4).

### <Comparative Example 3>

"Shutobancha" tencha was charged at 2 kg into a steam distiller and evenly dispersed in 1 kg of water at 35°C, and then allowed to stand for 10 minutes for moistening. Upon completion of the moistening, it was subjected to pressure reduction to -54 kN/m² [kPaG] as gauge pressure, and then steam distillation was carried out at an SV (space velocity) of 325 h⁻¹, distilling out 2 kg of liquid distillate from the tea leaf starting material. Immediately after the steam distillation, the tea leaves were extracted with water at 80°C to obtain 10 kg (Brix: 4.6) of extract from the tea leaf starting material. The extract was subject to enzyme treatment with tannase and pectinase and clarified by filtration, and concentrated under reduced pressure to obtain 0.47 kg of concentrate (Brix: 43). In the concentrate there was mixed and dissolved 5 g of ascorbic acid, after which 2 kg of liquid distillate was mixed therewith, and the mixture was stirred to uniformity and subjected to heat sterilization at 80°C × 30 sec to obtain a green tea extract (Brix: 8.4).

### <Comparative Example 4>

"Shutobancha" tencha was charged at 2 kg into a steam distiller and evenly dispersed in 1 kg of water at 35°C, and then allowed to stand for 10 minutes for moistening. Upon completion of the moistening, it was subjected to pressure reduction to -54 kN/m² [kPaG] as gauge pressure, and then steam distillation was carried out at an SV (space velocity) of 325 h⁻¹, distilling out 0.2 kg of liquid distillate from the tea leaf starting material, which was removed. Next, the container interior was restored to ordinary pressure, steam distillation was carried out under ordinary pressure, and 2 kg of liquid distillate was distilled out from the tea leaf starting material. Immediately after the steam distillation, the tea leaves were extracted with water at 80°C to obtain 10 kg (Brix: 4.6) of extract from the tea leaf starting material. The extract was subject to enzyme treatment with tannase and pectinase and clarified by filtration, and concentrated under reduced pressure to obtain 0.47 kg of concentrate (Brix: 43). After mixing and dissolving 5 g of ascorbic acid in the concentrate, 2 kg of liquid distillate was mixed therewith and the mixture was stirred to uniformity to obtain a green tea extract (Brix: 8.4).

### <Comparative Example 5>

"Shutobancha" tencha was charged at 2 kg into a steam distiller and evenly dispersed in 1 kg of water at 35°C, and then allowed to stand for 10 minutes for moistening. Upon completion of the moistening, it was subjected to pressure reduction to -54 kN/m² [kPaG] as gauge pressure, and then steam distillation was carried out at an SV (space velocity) of 325 h⁻¹, distilling out 0.2 kg of liquid distillate from the tea leaf starting material, which was removed. Next, the container interior was restored to ordinary pressure, steam distillation was carried out under ordinary pressure, and 2 kg of liquid distillate was distilled out from the tea leaf starting material. Immediately after the steam distillation, the tea leaves were extracted with water at 80°C to obtain 10 kg (Brix: 4.6) of extract from the tea leaf starting material. The extract was subject to enzyme treatment with tannase and pectinase and clarified by filtration, and concentrated under reduced pressure to obtain 0.47 kg of concentrate (Brix: 43). After mixing and dissolving 5 g of ascorbic acid in the concentrate, 2 kg of liquid distillate was mixed therewith and the mixture was stirred to uniformity. The formulated extract was subjected to heat sterilization at 120°C × 240 sec to obtain a green tea extract (Brix: 8.4).

### <Test Example 2>

The green tea extracts and green tea liquid extracts obtained in Examples 1 and 2 and Comparative Examples 1 to 5 were evaluated. Evaluation samples were prepared by addition of the green tea extracts to distilled water. The amount of addition was 1 wt%. The evaluation was conducted by an evaluation panel of 4 skilled members, judging strength of overall flavor, sweet green aroma, delightful floral aroma, bancha odor and burnt odor, on a 7-level scale from 1 (very weak) to 7 (very strong). The averages for the evaluation points are shown in Table 3, and comments are shown in Table 4.

**[Table 3: Evaluation scores]**

| | Strength of overall flavor | Sweet green aroma | Delightful floral aroma | Bancha odor | Burnt odor | Bitter astringency |
|---|---|---|---|---|---|---|
| Example 1 | 6.3 | 6.5 | 6.5 | 1.5 | 2.5 | 2.5 |
| Example 2 | 6.0 | 5.0 | 6.0 | 2.0 | 2.8 | 6.0 |
| Comp. Example 1 | 1.5 | 1.8 | 1.5 | 1.5 | 1.8 | 1.8 |
| Comp. Example 2 | 4.0 | 4.3 | 4.3 | 5.3 | 5.5 | 4.3 |
| Comp. Example 3 | 3.8 | 3.0 | 3.3 | 6.3 | 3.8 | 4.3 |
| Comp. Example 4 | 4.3 | 4.5 | 4.8 | 1.8 | 2.0 | 3.0 |
| Comp. Example 5 | 3.8 | 3.5 | 3.5 | 2.0 | 5.8 | 4.0 |

**[Table 4: Comments]**

| | Evaluation comment |
|---|---|
| Example 1 | Virtually no bancha odor, very strong sweet green aroma and delightful floral aroma, with sufficient potency |
| Example 2 | Virtually no bancha odor, strong sweet green aroma and floral aroma, some bitter astringency |
| Comp. Example 1 | Weak overall flavor |
| Comp. Example 2 | Strong bancha odor, some burnt odor noted |
| Comp. Example 3 | Very strong bancha odor, unpleasant |
| Comp. Example 4 | Weak bancha odor, somewhat weak overall flavor, subdued flavor |
| Comp. Example 5 | Somewhat weak overall potency, burnt-like heated odor |

Based on the results in Tables 3 and 4, the green tea extracts prepared in Examples 1 and 2 had less of the undesirable flavor found in low-grade green tea leaves, known as bancha odor, compared to the comparative examples, while also having a sweet green aroma and strong delightful floral aroma reminiscent of high-grade green tea leaves, and exhibiting a powerful overall flavor potency. This effect was particularly notable with the green tea extract of Example 1. The green tea extract of Example 2 exhibited a somewhat bitter astringent taste, while having a similar effect as in Example 1. Also, comparative Examples 4 and 5 were able to reduce bancha odor, but both had weaker green aroma and floral aroma than Examples 1 and 2, and increased flavor potency was found to be exhibited by thermal treatment at no higher than 100°C.

### [III] Production and evaluation of tea drinks containing green tea extract

### <Example 3> Production of green tea drinks

After adding 70 g of ordinary sencha to 2100 g of water warmed to 70°C, stirring extraction was performed for 5 minutes, after which the tea leaves were separated with a 140 mesh and cooled to no higher than 20°C, and after cooling, centrifugal separation was performed at 6300 rpm for 5 minutes to obtain a supernatant to which 3.7 g of sodium bicarbonate and 4 g of vitamin C were added, and purified water was further added to 10 L, to obtain a standard tea drink. The standard tea drink was then subjected to sterilization for 130°C × 1 minute to obtain comparison drink 1. Separately, the steam fraction 1-1 obtained in experimental example 1 was added to the standard tea drink at 0.2% (weight ratio) and then sterilized for 130°C × 1 minute to obtain comparison drink 2, the steam fraction 1-2 obtained in experimental example 1 was added at 0.2% (weight ratio) and then sterilized at 130°C × 1 minute to obtain comparison drink 3, the steam fractions 1-1 and 1-2 were added each at 0.2% (weight ratio) and then sterilized at 130°C × 1 minute to obtain comparison drink 4, and the green tea extract (Brix: 8.4) obtained in Comparative Example 4 was added at 0.2% (weight ratio) and then sterilized at 130°C × 1 minute to obtain comparison drink 5. Also, the green tea extract (Brix: 8.4) obtained in Example 1 was added to the standard tea drink at 0.2% (weight ratio) and then sterilized at 130°C × 1 minute to obtain a drink of the invention.

The standard tea drinks, comparison drinks 1 to 5 and the drink of the invention were evaluated by a panel of professionals.

The strengths of the fresh, delightful aroma (sweet green aroma and delightful floral aroma), the residual aftertaste and the overall flavor were evaluated by a panel of 8 professionals on a 6-level scale (5: Very strongly apparent, 4: strongly apparent, 3: apparent, 2: somewhat apparent, 1: slightly apparent, 0: completely unapparent), and the average score was calculated.

The results are shown in Table 5 and Table 6. As seen in Table 5, unlike the comparison drinks, the drinks of the invention had a fresh, floral aroma and residual aftertaste comparable to high-grade tea leaves. Also, as seen in Table 6, there was low reduction or loss of flavor during heat sterilization.

**[Table 5]**

| | Evaluation | |
|---|---|---|
| | Fresh, delightful aroma | Residual aftertaste |
| Comparison drink 1 | 2.0 | 2.5 |
| Comparison drink 2 | 1.9 | 1.3 |
| Comparison drink 3 | 3.3 | 3.0 |
| Comparison drink 4 | 2.6 | 2.5 |
| Comparison drink 5 | 4.3 | 4.0 |
| Invention drink | 4.4 | 4.4 |

**[Table 6]**

| | Evaluation |
|---|---|
| | Strong overall flavor |
| Standard tea drink | 4.3 |
| Comparison drink 1 | 2.5 |
| Invention drink | 4.2 |

### Industrial Applicability

Adding a green tea extract of the invention to a tea drink can result in a tea drink having a fresh, floral aroma and residual aftertaste characteristic of high-grade tea leaves, and low reduction or loss of flavor during heat sterilization.

## Claims

1. A process for producing a green tea extract comprising:
step 1 in which a liquid distillate obtained by fractionation from green tea leaves by vacuum steam distillation is removed,
step 2 in which the green tea leaves from which the liquid distillate has been removed in step 1 are fractionated by atmospheric-pressure steam distillation to obtain a liquid distillate,
step 3 in which the green tea leaf residue after steam distillation in step 2 is subjected to water extraction to obtain a liquid extract,
step 4 in which the liquid distillate of step 2 and the liquid extract of step 3 are mixed to prepare a green tea extract, and
step 5 in which the green tea extract of step 4 is subjected to thermal treatment at a temperature of no higher than 100°C,
wherein the conditions for the vacuum steam distillation in step 1 are pressure reduction at a gauge pressure of -90 to -30 kN/m² [kPaG], steam distillation at a space velocity (SV) of 50 to 450 ^{h-1}, and a distillate volume of 5 to 100% (weight ratio) with respect to the tea leaf starting material..

2. The process according to claim 1, which comprises, before step 4, a step in which the liquid extract of step 3 is treated with one or more enzymes selected from among tannase, pectinase and cellulase.

3. The process for producing a drink comprising a step of adding the green tea extract produced by the process according to any one of claims 1 to 2, to the drink.

4. The process according to claim 3, wherein the drink to which the green tea extract is to be added comprises a liquid tea extract obtained by extraction with water from green tea leaves.

5. The process according to claim 3 or 4, wherein the drink is a packed green tea drink.

## Patentansprüche

1. Verfahren zur Herstellung eines Grüntee-Extrakts, umfassend:
Schritt 1, bei dem man ein durch Fraktionieren aus Grüntee-Blättern durch Vakuumdampfdestillation erhaltenes flüssiges Destillat entfernt,
Schritt 2, bei dem man die Grüntee-Blätter, von denen in Schritt 1 das flüssige Destillat entfernt wurde, durch Dampfdestillation bei Normaldruck unter Erhalt eines flüssigen Destillats fraktioniert,
Schritt 3, bei dem man den Grüntee-Blattrückstand nach der Dampfdestillation in Schritt 2 einer Wasserextraktion unter Erhalt eines flüssigen Extrakts unterzieht,
Schritt 4, bei dem man das flüssige Destillat von Schritt 2 und den flüssigen Extrakt von Schritt 3 unter Bildung eines Grüntee-Extrakts mischt, und
Schritt 5, bei dem man den Grüntee-Extrakt von Schritt 4 einer thermischen Behandlung bei einer Temperatur von nicht mehr als 100°C unterzieht,
wobei die Bedingungen für die Vakuumdampfdestillation in Schritt 1 Druckreduktion bei einem Nanometerdruck von -90 bis -30 kN/m² [kPaG], Dampfdestillation bei einer Raumgeschwindigkeit (Space Velocity, SV) von 50 bis 450^{h-1} und ein Destillatvolumen von 5 bis 100% (Gewichtsverhältnis), bezogen auf das Teeblatt-Ausgangsmaterial, sind.

2. Verfahren nach Anspruch 1, welches vor dem Schritt 4 einen Schritt umfasst, bei dem man den flüssigen Extrakt von Schritt 3 mit einem oder mehreren aus Tannase, Pectinase und Cellulase ausgewählten Enzymen behandelt.

3. Verfahren zur Herstellung eines Getränks, umfassend einen Schritt, bei dem man den durch das Verfahren nach einem der Ansprüche 1 bis 2 hergestellten Grüntee-Extrakt dem Getränk zusetzt.

4. Verfahren nach Anspruch 3, bei dem das Getränk, dem der Grüntee-Extrakt zugesetzt werden soll, einen durch Extraktion mit Wasser aus Grüntee-Blättern erhaltenen flüssigen Teeextrakt umfasst.

5. Verfahren nach Anspruch 3 oder 4, wobei es sich bei dem Getränk um ein abgepacktes Grüntee-Getränk handelt.

## Revendications

1. Procédé de production d'un extrait de thé vert, comprenant :
une étape 1, dans laquelle un distillat liquide obtenu par fractionnement à partir de feuilles de thé vert par distillation à la vapeur sous vide, est éliminé ;
une étape 2, dans laquelle les feuilles de thé vert à partir desquelles le distillat liquide a été éliminé dans l'étape 1, sont fractionnées par distillation à la vapeur sous pression atmosphérique afin d'obtenir un distillat liquide ;
une étape 3, dans laquelle le résidu de feuilles de thé vert après distillation à la vapeur dans l'étape 2 est soumis à une extraction aqueuse afin d'obtenir un extrait liquide ;
une étape 4, dans laquelle le distillat liquide de l'étape 2 et l'extrait liquide de l'étape 3 sont mélangés afin de préparer un extrait de thé vert ; et
une étape 5, dans laquelle l'extrait de thé vert de l'étape 4 est soumis à un traitement thermique à une température non supérieure à 100°C ;
dans lequel les conditions de distillation à la vapeur sous vide dans l'étape 1 sont une réduction de pression à une pression manométrique allant de -90 à -30 kN/m² [kPaG], une distillation à la vapeur à une vitesse spatiale (SV) allant de 50 à 450 h^{- 1}, et un volume de distillat allant de 5 à 100% (rapport pondéral) par rapport au produit de départ à base de feuilles de thé.

2. Procédé selon la revendication 1, comprenant, avant l'étape 4, une étape dans laquelle l'extrait liquide de l'étape 3 est traité par une ou plusieurs enzymes choisies parmi la tannase, la pectinase et la cellulase.

3. Procédé de production d'une boisson, comprenant une étape d'addition de l'extrait de thé vert produit par le procédé selon l'une quelconque des revendications 1 à 2, à la boisson.

4. Procédé selon la revendication 3, dans lequel la boisson dans laquelle l'extrait de thé vert doit être ajouté comprend un extrait de thé liquide obtenu par une extraction aqueuse à partir de feuilles de thé vert.

5. Procédé selon la revendication 3 ou 4, dans lequel la boisson est une boisson de thé vert sous emballage.
